# EUROPEAN PATENT SPECIFICATION

(11) **EP 4 024 654 B1**
(45) Date of publication and mention of the grant of the patent: **08.03.2023**
(21) Application number: 21150067.3
(22) Date of filing: 04.01.2021
(51) Int. Cl.: H02J 7/00

(54) **METHOD FOR OPERATING A BATTERY SYSTEM**
VERFAHREN ZUM BETRIEB EINES BATTERIESYSTEMS
PROCÉDÉ DE FONCTIONNEMENT D'UN SYSTÈME DE BATTERIE

(43) Date of publication of application: 06.07.2022
(73) Proprietor: Volvo Car Corporation, 40531 Göteborg (SE)
(72) Inventor: FOGELBERG, Fabian, 40531 Göteborg (SE); LEUCHOVIUS, Nicklas, 40531 Göteborg (SE); AHLBERG TIDBLAD, Annika, 40531 Göteborg (SE); CIRIC, Alma, 40531 Göteborg (SE); HANSEN, Sören, 40531 Göteborg (SE)
(74) Representative: Maiwald GmbH

(56) References cited:
- EP-A1- 2 660 615
- US-A1- 2007 247 106

## Description

### TECHNICAL FIELD

The present invention relates to a method for operating a battery system with a plurality of cells, a battery system applying such a method, a vehicle comprising such a battery system and a computer program element for operating such a battery system.

### BACKGROUND ART

Battery-powered vehicles, such as electric vehicles or hybrid electric vehicles comprise a battery system supplying a high-voltage to operate an electric motor to run the vehicle. The battery system may comprise a plurality of battery cells connected in series or parallel. For a safe operation and a reliable power estimation, the battery system may be associated with a battery monitoring system (BMS). The BMS is an electronic system, which constantly monitors parameters associated with the battery system and cells such as a state of charge and/or state of health.

Rechargeable battery system comprising a plurality of cells ages over time and degrades in a capacity over time. Furthermore, the battery system with a high energy density may introduce hazards and cause an explosion or a fire. Hence, the BMS may monitor and collect data of the battery system to avoid risky situations and optimize a performance of the battery system.
US 2007/247106 A1 discloses a storage battery control system for a hybrid vehicle for suppressing a performance reduction even when an abnormality occurs. The storage battery control system is configured for setting an allowable charge state range for a plurality of storage batteries connected in parallel, executing a charge and discharge control between the storage batteries and electric loads in the vehicle within the allowable charge state range, and separating a storage battery in which the abnormality is detected.
EP 2 660 615 A1 discloses a method of detecting battery degradation level. The method comprises detecting a change in residual capacity for one charging period from a start of charging until charging is stopped or one discharging period from a start of discharge until discharge is stopped.

### SUMMARY

Hence, there still may be a need to provide an improved method for operating a battery system, which provides a safe and efficient power supply.

The problem is solved by the subject matters of the independent claims of the present disclosure, wherein further embodiments are incorporated in the dependent claims. It should be noted that the aspects of the disclosure described in the following apply to the method for operating a battery system with a plurality of cells, a battery system applying such a method, a vehicle comprising such a battery system and a computer program element for operating such a battery system.

According to the present disclosure, a method for operating a battery system with a plurality of cells is presented. The method for operating a battery system comprises monitoring a state of health of each of the plurality of cells, detecting at least one malfunctioning cell, analysing the state of health of the malfunctioning cell, limiting a discharge power over a time period if the malfunctioning cell has a worst state of health in the battery system or limiting a charge power over a time period if the malfunctioning cell has a best state of health in the battery system, and reducing a minimum state of charge of the battery system over the time period.

The method for operating a battery system according to the present disclosure may allow a robust and continuous operation of the battery system even though at least one cell may fail to operate. Such failure may be caused by a disruption between the cell and the battery monitoring system (BMS), which may lead to a voltage signal loss. If the BMS detects any fault in a connection with the cell, the BMS generally disconnects the battery system and the battery system becomes functionless. However, the method of the present disclosure enables a continuous power supply by limiting either a charge or a discharge power even in case of a malfunction of at least one cell or the battery system. Accordingly, a sudden disconnection of the battery system or a power failure such as stop of power supply may be prevented.

The battery system may comprise a plurality of cells, which are connected in series and/or parallel, and a control unit such as a battery monitoring system. The control unit may be configured to monitor a state of the individual cells or the battery system, collect parameters regarding the state and control the individual cells or the battery system accordingly. The parameters may be associated with, for example, temperature, internal resistance, capacity, voltage and current in and out of the cells and/or the battery system.

The control unit may monitor a state of health (SoH) of each cell of the battery system. The state of health can be understood as an indication of a current condition of the individual cells compared to their original capacity. The SoH may indicate a returnable (usable) or net capacity of a battery cell through its cumulative stress-life caused by repeating charging and discharging. Accordingly, the state of health may provide an information about a suitability of the cells or battery system for an application.

The state of health may be shown as percentages. In other words, the state of health may be an indication of how the cells or battery system meets the manufacturing specification. Accordingly, 100% of the SoH may mean that the parameters may meet the specification of battery system at a time of manufacture. However, the SoH may decrease over time, as the battery system degrades, which would cause a decrease of an ability of the battery system to hold a charge and to deliver current.

The control unit may be configured to detect a failure of any one of the cells and analyse the state of the health of the cell having the failure. The failure may occur due to any disruption or malfunction between the cell and the battery monitoring system such as fault in a voltage sense wire and/or fault in a battery monitoring system, which may lead to a voltage signal loss. As soon as a malfunction is detected, the control unit may evaluate the health of the malfunctioning cell.

Based on the analysis, the control unit may determine to limit either a discharge power over a time period if the cell has the worst state of health in the battery system or a charge power over a time period if the cell has the best state of health in the battery system. In other words, the voltage supplied from the battery system may be limited if the malfunctioning cell has a lowest percentage of the SoH among the cells of the battery system. Further, the voltage supplied to the battery system may be limited if the malfunctioning cell has a highest percentage of the SoH among the cells of the battery system. The term "limited" may be understood as "decreased" or that the BMS sets an upper or lower threshold, which may not be exceed.

At the same time, the control unit may reduce a minimum state of charge of the battery system over the time period. The state of charge (SoC) may indicate a level of charge of the battery system. The SoC may be shown as percentages as well. Generally, the state of charge and the state of health of the cells are dependent of each other. A reduction of minimum state of charge may result in an increase of the capacity of the battery system such that the battery system may extend the power supply even the malfunctioning cell. The time period may be determined dependently of an operating capacity of the battery system.

In an embodiment, the method further comprises evaluating a trend of the state of health of each of the plurality of cells. The control unit may estimate the trend of the SoH by evaluating the state of health of each cell per a predefined time unit. The time unit may be for example, seconds, minutes, hours or days. Accordingly, a change of the state of health of each individual cell may be estimated, for example by plotting data of the trend of the SoH during a certain period.

In an embodiment, the method further comprises limiting a charge or discharge power and a charge or discharge maximum time, if the malfunctioning cell has a worst trend of state of health in the battery system. The term "worst trend" may be understood so that the cell is showing a degradation rate that is faster than the other cells. This is an indication of a possible fault that can lead to a premature end of life for that cell. An exact nature of the end of life behavior of the cell may be a loss of function. However, the trend may also indicate that there is a fault in the cell, which may lead to a thermal event, in case the cell continues to be used as normal. The latter may be the reason for reducing the charge and/or discharge conditions allowed for the cell, thus reducing the risk of failure and allowing safe operation of the cell until appropriate repairs can be made.

The control unit may determine according to the estimated trend of state of health of each cells at which status the malfunctioning cell is. If the malfunctioning cell has the worst trend of the state of health, the control unit may lower a charge or a discharge power. Additionally, the control unit may limit a charge or discharge maximum time to increase an operating capacity of the battery system until a repair is performed. Limiting the charge or discharge maximum time of the cell may mean limiting an energy throughput allowed through the cell. This measure can allow the faulty cell to align with the other cells in the plurality.

In an embodiment, the method further comprises allowing driving to an end of a driving cycle. Generally, the malfunctioning cell causes a loss of (voltage) signal, accordingly, a loss of function of the battery system. However, by adjusting the charge or discharge power and/or a charge or discharge maximum time according to the state of health of the cells, the vehicle may be able to perform at least a driving cycle such that the vehicle may not directly stop driving as soon as the malfunction is detected.

In an embodiment, the method further comprises turning off a cell balancing unit to maintain differences of the state of health of the cells at a status before a malfunction occurs. The cell balancing unit may be configured to transfer charge between the cells, thus bring all cells into a substantially same state of charge. By redistributing charge between the cells, the cell balancing unit may compensate for the loss of capacity caused by the cell with the worst state of health, accelerate a charging speed and extend an operation life of the battery system.

However, in case of the malfunction of any one of the cells, the control unit may turn off the cell balancing unit as soon as the control unit detects the malfunction. Accordingly, a reliable analysis of the state of health of each cells at the time just before the malfunction arises can be performed and a suitable adjustment of a charge or discharge power and/or a charge or discharge maximum time can be determined.

In an embodiment, the method further comprises monitoring a state of health comprising monitoring a cell capacity, a cell resistance and/or a cell self-discharge rate. In other words, the term "health" of the cells may be understood as a cell capacity, a cell resistance and/or a cell self-discharge rate, which may characterize a state of the cells. Accordingly, the state of health may be shown as a state of the cell capacity, a state of a cell resistance and/or a state of a self-discharge rate.

In an embodiment, the method further comprises evaluating a trend of the state of health comprising monitoring a cell capacity, a cell resistance and/or a cell self-discharge rate per a time unit. Since the trend of the state of health may be estimated by evaluating the state of health of each cell per a predefined time unit, the trend of the state of health may be, for example, a capacity loss per time unit, a resistance loss per time unit, a voltage loss per time and/or a balancing need per time unit.

In the invention, the malfunction of the cell must be detected based on at least one lost or corrupted voltage signal. In an embodiment, the malfunction is based on a fault in a voltage sense wire, in a battery monitoring system and/or a lost communication in the battery monitoring system. The fault in the voltage sense wire may occur, for example, if a welding spot of the wire at the cell is broken so that the line is open or the voltage sense wire connected to the cell is lost. The fault in BMS may be caused, for example, by an AC-DC conversion fault, thus providing an incorrect or no voltage. The lost communication fault may be, for example, a communication error of the cell voltage temperature node (CVTN).

According to the present disclosure, also a battery system is presented. The battery system applies the method for operating a battery system as described above and comprises a plurality of cells and a control unit. The control unit is configured for
- monitoring a state of health of each of the plurality of cells,
- detecting at least one malfunctioning cell,
- analysing the state of health of the malfunctioning cell, and
- limiting a discharge power over a time period if the malfunctioning cell has the worst state of health in the battery system or limiting a charge power over a time period if the malfunctioning cell has the best state of health in the battery system.

The battery system may further comprise a plurality of cells, each of which may be welded to a voltage sense wire, a connector and a BMS system. Each voltage sense wire may be collected at the connector and the connector may be coupled to the BMS system. The battery system according to the present disclosure allows a robust and continuous operation of the battery system even though a voltage signal loss occurs.

In an embodiment, the battery system is configured to operate without interruption even a malfunctioning cell. The battery system may enable a continuous power supply by limiting either a charge or a discharge power even in case of a malfunction of at least one cell in the battery system. Accordingly, a sudden disconnection of the battery system or a power failure such as stop of power supply may be prevented, which would otherwise result in a loss of propulsion energy.

According to the present disclosure, also a vehicle is presented. The vehicle comprises a battery system as described above. The vehicle is a battery electric vehicle (BEV), a plug-in-hybrid electric vehicle (PHEV) and/or a hybrid electric vehicle (HEV). An electric motor arranged in a vehicle may be operated based on a power supply from a battery system. Hence, the vehicle may also drive continuously even though a voltage signal is lost or corrupted. In other words, the vehicle may be allowed to drive for a certain duration to avoid a sudden stop of the vehicle.

In an embodiment, the vehicle is configured to block starting the vehicle after a time period is expired, in case of a malfunctioning cell in the battery system. After the malfunction is detected, the control unit may allow the vehicle to drive for a certain time period such that the vehicle does not directly stop moving and the driver may have a possibility to conduct an emergency action. However, after the time period or a driving cycle, the driver may not be any more allowed to start the vehicle again without remedying the malfunction. Hence, a safe driving condition may be provided.

According to the present disclosure, also a computer program element for operating a battery system as described above is presented. The program element is adapted to perform the method steps as described above when being executed by a processing element.

It should be noted that the above embodiments may be combined with each other irrespective of the aspect involved. Accordingly, the method may be combined with structural features and, likewise, the system may be combined with features described above with regard to the method.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
- Fig. 1: shows schematically and exemplarily an embodiment of a battery system according to the present disclosure.

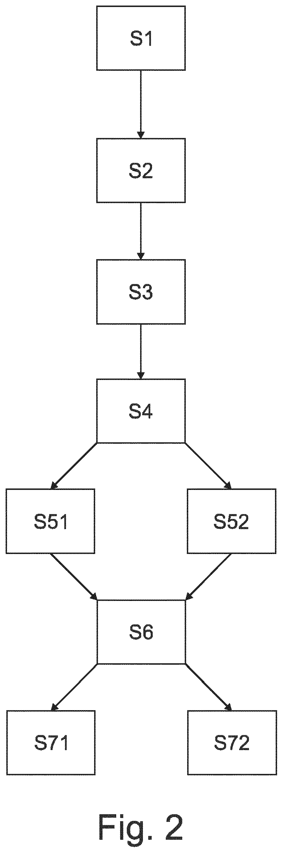

- Fig. 2: shows schematically and exemplarily an embodiment of a method for operating a battery system with a plurality of cells according to the present disclosure.

### DESCRIPTION OF EMBODIMENTS

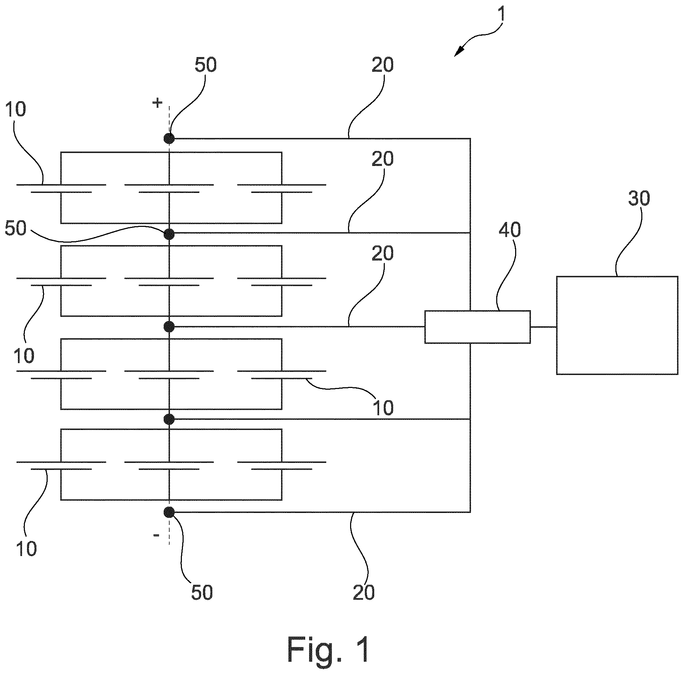

Fig. 1 shows a battery system 1 comprising a plurality of cells 10. The battery system 1 may be integrated in an electric vehicle such as battery electric vehicle (BEV), a plug-in-hybrid electric vehicle (PHEV) and/or a hybrid electric vehicle (HEV). To supply power for driving the electric vehicle, the battery system 1 requires the plurality of cells 10 connected in series or parallel to each other.

The battery system 1 further comprises a battery monitoring system (BMS) 30 for monitoring a voltage of each cell 10 continuously, which are connected to the BMS 30 by voltage sense wires 20 via a connector 40. The battery system 1 also comprises a control unit, which may be integrated in the BMS 30 or a separate component of the battery system 1. The control unit is configured to continuously monitor a state of health of each cell 10 and perform a countermeasure in case of a voltage signal loss.

The battery system 1 may have a defect on the voltage sense wire 20, welding spots 50 of the voltage sense wire 20, connector 40 and/or BMS 30. The malfunction of any one of the cells 10 or the battery system 1 may cause a loss of one voltage signal or several voltage signals, which would lead to a disconnection of the battery system 1 and a loss of propulsion energy of the electric motor.

Accordingly, the control unit monitors S1 a state of health of each of the plurality of cells 10, wherein the state of health may be a cell capacity, a cell resistance and/or a cell self-discharge rate. As soon as the control unit detects S2 at least one malfunctioning cell, a cell balancing unit is turned off S3 and the state of health of each cells 10 just prior to occurring the malfunction is maintained.

The control unit analyses S4 the collected data, in particular the state of health (SoH) of the malfunctioning cell. If the malfunctioning cell 10 has a worst SoH in the battery system 1, the control unit limits S51 or decreases a discharge power and slowly reduces a minimum state of charge (SoC) of the battery system 1 over a time period. However, if the malfunction cell 10 has a best SoH in the battery system 1, the control unit limits S52 or decreases a charge power and slowly reduces a minimum SoC of the battery system 1 over a time period.

Further, the control unit analyses S6 a trend of the SoH of each cells 10 by evaluating the SoH per a predefined time unit. If the malfunctioning cell 10 has a worst trend of state of health in the battery system 1, the control unit limits S71 charge and/or discharge power and reduces a charge or discharge maximum time until the malfunction is repaired. In other case, a normal operation is allowed S72, since the charge and/or discharge power may be limited by other cells 10 with a worse trend of the SoH.

Accordingly, the battery system 1 may operate without interruption even a malfunction of any one of the cells 10, thus a robust and reliable power supply may be ensured.

It has to be noted that embodiments of the disclosure are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed embodiments. Other variations to the disclosed embodiments can be understood and effected by those skilled in the art in practicing a claimed disclosure, from a study of the drawings, the disclosure, and the dependent claims, said variations being part of the present invention if they do not contradict the appended claims (i.e. if they comprise all features of at least one of the independent claims).

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A method for operating a battery system (1) with a plurality of cells (10), comprising:
- monitoring a state of health of each of the plurality of cells (10),
- detecting at least one malfunctioning cell,
- analysing the state of health of the malfunctioning cell,
**characterized in**
- limiting a discharge power over a time period if the malfunctioning cell (10) has the worst state of health among the cells (10) in the battery system (1) or limiting a charge power over a time period if the malfunctioning cell (10) has the best state of health among the cells (10) in the battery system (1), and
- reducing a minimum state of charge of the battery system (1) over the time period,
a malfunction of the cell (10) being detected based on at least one lost or corrupted voltage signal.

2. The method according to claim 1, further comprising evaluating a trend of the state of health of each of the plurality of cells (10).

3. The method according to the preceding claim 2, further comprising limiting a charge or discharge power and a charge or discharge maximum time, if the malfunctioning cell (10) has a worst trend of state of health in the battery system (1).

4. The method according to any of the preceding claims, further comprising turning off a cell balancing unit as soon as detecting at least one malfunctioning cell to maintain differences of the state of health of the cells (10) at a status before the malfunction occurs.

5. The method according to any of the preceding claims, monitoring a state of health comprising monitoring a cell capacity, a cell resistance and/or a cell self-discharge rate.

6. The method according to the preceding claim 2, evaluating a trend of the state of health comprising monitoring a cell capacity, a cell resistance and/or a cell self-discharge rate per a time unit.

7. The method according to any of the preceding claims, the malfunction being based on a fault in a voltage sense wire (20) in a battery monitoring system (30) and/or a lost communication in the battery monitoring system (30).

8. A battery system (1) applying the method for operating a battery system (1) according to any of claims 1 to 7, comprising a plurality of cells (10) and a control unit, the control unit being configured for
- monitoring a state of health of each of the plurality of cells (10),
- detecting at least one malfunctioning cell (10),
- analysing the state of health of the malfunctioning cell (10),
- limiting a discharge power over a time period if the malfunctioning cell (10) has the worst state of health among the cells (10) in the battery system (1) or limiting a charge power over a time period if the malfunctioning cell (10) has the best state of health among the cells (10) in the battery system (1), and
- reducing a minimum state of charge of the battery system (1) over the time period,
a malfunction of the cell (10) being detected based on at least one lost or corrupted voltage signal.

9. A vehicle comprising a battery system (1) according to claim 8, the vehicle being a battery electric vehicle (BEV), a plug-in-hybrid electric vehicle (PHEV) and/or a hybrid electric vehicle (HEV).

10. The vehicle according to claim 9, being configured to block starting the vehicle after a time period is expired, in case of a malfunctioning cell (10) in the battery system (1).

## Patentansprüche

1. Verfahren zum Betreiben eines Batteriesystems (1) mit mehreren Zellen (10), umfassend:
- Überwachen eines Gesundheitszustands jeder der mehreren Zellen (10),
- Erkennen mindestens einer Zelle mit einer Fehlfunktion,
- Analysieren des Gesundheitszustands der Zelle mit der Fehlfunktion,
**gekennzeichnet dadurch**
- Begrenzen einer Entladeleistung über einen Zeitraum, wenn die Zelle mit der Fehlfunktion (10) den schlechtesten Gesundheitszustand unter den Zellen (10) in dem Batteriesystem (1) aufweist, oder Begrenzen einer Ladeleistung über einen Zeitraum, wenn die Zelle mit der Fehlfunktion (10) den besten Gesundheitszustand unter den Zellen (10) im Batteriesystem (1) aufweist, und
- Reduzieren eines Mindestladezustands des Batteriesystems (1) über den Zeitraum,
wobei die Fehlfunktion der Zelle (10) basierend auf mindestens einem verlorenen oder beschädigten Spannungssignal erkannt wird.

2. Verfahren nach Anspruch 1, ferner umfassend Bewerten eines Trends des Gesundheitszustands jeder der mehreren Zellen (10).

3. Verfahren nach dem vorangehenden Anspruch 2, ferner umfassend Begrenzen einer Lade- oder Entladeleistung und einer Lade- oder Entlademaximalzeit, wenn die Zelle mit der Fehlfunktion (10) eine schlechteste Tendenz des Gesundheitszustands in dem Batteriesystem (1) aufweist.

4. Verfahren nach einem der vorangehenden Ansprüche, ferner umfassend Abschalten einer Zellenausgleichseinheit, sobald mindestens eine Zelle mit der Fehlfunktion erfasst wird, um Unterschiede des Gesundheitszustands der Zellen (10) auf einem Status aufrechtzuerhalten, bevor die Fehlfunktion auftritt.

5. Verfahren nach einem der vorhergehenden Ansprüche, wobei Überwachen eines Gesundheitszustands Überwachen einer Zellkapazität, eines Zellwiderstands und/oder einer Zellselbstentladungsrate umfasst.

6. Verfahren nach dem vorhergehenden Anspruch 2, wobei Bewerten eines Gesundheitszustandstrends Überwachen einer Zellkapazität, eines Zellwiderstands und/oder einer Zellselbstentladungsrate pro Zeiteinheit umfasst.

7. Verfahren nach einem der vorhergehenden Ansprüche, wobei die Fehlfunktion auf einem Fehler in einem Spannungserfassungsdraht (20) in einem Batterieüberwachungssystem (30) und/oder einer verlorenen Kommunikation im Batterieüberwachungssystem (30) basiert.

8. Batteriesystem (1), das das Verfahren zum Betreiben eines Batteriesystems (1) nach einem der Ansprüche 1 bis 7 anwendet, umfassend eine Vielzahl von Zellen (10) und eine Steuereinheit, die konfiguriert ist zum:
- Überwachen eines Gesundheitszustands jeder der mehreren Zellen (10),
- Erkennen mindestens einer Zelle mit einer Fehlfunktion,
- Analysieren des Gesundheitszustands der Zelle mit der Fehlfunktion,
- Begrenzen einer Entladeleistung über einen Zeitraum, wenn die Zelle mit der Fehlfunktion (10) den schlechtesten Gesundheitszustand unter den Zellen (10) in dem Batteriesystem (1) aufweist, oder Begrenzen einer Ladeleistung über einen Zeitraum, wenn die Zelle mit der Fehlfunktion (10) den besten Gesundheitszustand unter den Zellen (10) im Batteriesystem (1) aufweist, und
- Reduzieren eines Mindestladezustands des Batteriesystems (1) über den Zeitraum,
wobei die Fehlfunktion der Zelle (10) basierend auf mindestens einem verlorenen oder beschädigten Spannungssignal erkannt wird.

9. Fahrzeug, umfassend ein Batteriesystem (1) nach Anspruch 8, wobei das Fahrzeug ein Batterie-Elektrofahrzeug (BEV), ein Plug-in-Hybrid-Elektrofahrzeug (PHEV) und/oder ein Hybrid-Elektrofahrzeug (HEV) ist.

10. Fahrzeug nach Anspruch 9, wobei das Fahrzeug konfiguriert ist, Starten des Fahrzeugs nach Ablauf einer Zeitdauer zu blockieren, im Fall einer Zelle mit einer Fehlfunktion (10) in dem Batteriesystem (1).

## Revendications

1. Procédé de fonctionnement d'un système de batterie (1) avec une pluralité de cellules (10), comprenant de :
- surveiller un état de santé de chacune de la pluralité de cellules (10),
- détecter au moins une cellule défectueuse,
- analyser l'état de santé de la cellule défectueuse,
**caractérisé par** le fait de
- limiter une puissance de décharge sur une période de temps si la cellule défectueuse (10) a le plus mauvais état de santé parmi les cellules (10) dans le système de batterie (1) ou
- limiter une puissance de charge sur une période de temps si la cellule défectueuse (10) a le meilleur état de santé parmi les cellules (10) dans le système de batterie (1), et
- réduire un état de charge minimal du système de batterie (1) sur la période de temps,
un dysfonctionnement de la cellule (10) étant détecté sur la base d'au moins un signal de tension perdu ou corrompu.

2. Procédé selon la revendication 1, comprenant en outre l'évaluation d'une tendance de l'état de santé de chacune de la pluralité de cellules (10).

3. Procédé selon la revendication 2 précédente, comprenant en outre la limitation d'une puissance de charge ou de décharge et d'un temps maximal de charge ou de décharge, si la cellule défectueuse (10) présente une tendance d'état de santé la plus défavorable dans le système de batterie (1).

4. Procédé selon l'une quelconque des revendications précédentes, comprenant en outre l'arrêt d'une unité d'équilibrage de cellules dès la détection d'au moins une cellule défectueuse pour maintenir les différences d'état de santé des cellules (10) à un état avant que le dysfonctionnement ne se produise.

5. Procédé selon l'une quelconque des revendications précédentes, la surveillance d'un état de santé comprenant la surveillance d'une capacité de cellule, d'une résistance de cellule et/ou d'un taux d'autodécharge de cellule.

6. Procédé selon la revendication 2 précédente, l'évaluation d'une tendance de l'état de santé comprenant la surveillance d'une capacité de cellule, d'une résistance de cellule et/ou d'un taux d'autodécharge de cellule par unité de temps.

7. Procédé selon l'une quelconque des revendications précédentes, le dysfonctionnement étant basé sur un défaut dans un fil de détection de tension (20) dans un système de surveillance de batterie (30) et/ou une communication perdue dans le système de surveillance de batterie (30).

8. Système de batterie (1) appliquant le procédé de fonctionnement d'un système de batterie (1) selon l'une quelconque des revendications 1 à 7, comprenant une pluralité de cellules (10) et une unité de commande, l'unité de commande étant configurée pour
- surveiller un état de santé de chacune de la pluralité de cellules (10),
- détecter au moins une cellule défectueuse (10),
- analyser l'état de santé de la cellule défectueuse (10),
- limiter une puissance de décharge sur une période de temps si la cellule défectueuse (10) a le plus mauvais état de santé parmi les cellules (10) dans le système de batterie (1) ou
- limiter une puissance de charge sur une période de temps si la cellule défectueuse (10) a le meilleur état de santé parmi les cellules (10) dans le système de batterie (1), et
- réduire un état de charge minimal du système de batterie (1) sur la période de temps,
un dysfonctionnement de la cellule (10) étant détecté sur la base d'au moins un signal de tension perdu ou corrompu.

9. Véhicule comprenant un système de batterie (1) selon la revendication 8, le véhicule étant un véhicule électrique à batterie (battery electric vehicle, BEV), un véhicule électrique hybride rechargeable (plug-in-hyprid electric vehicle, PHEV) et/ou un véhicule électrique hybride (hybrid electric vehicle, HEV).

10. Véhicule selon la revendication 9, configuré pour bloquer le démarrage du véhicule après l'expiration d'une période de temps, en cas de cellule défectueuse (10) dans le système de batterie (1).
